# EUROPEAN PATENT SPECIFICATION

(11) **EP 2 403 044 B1**
(45) Date of publication and mention of the grant of the patent: **20.02.2013**
(21) Application number: 11181659.1
(22) Date of filing: 03.04.2008
(51) Int. Cl.: H01M 8/12, H01M 8/02, C03B 27/012, C03C 3/064, C03C 8/24, C03C 10/00, C03C 14/00, C03C 29/00, C04B 35/195, F16J 15/12

(54) **Sealing materials, solid oxide fuel cells utilizing such materials and a method of making such materials**
Dichtungsmaterialien, Festoxidbrennstoffzellen mit den Materialien und Verfahren zur Herstellung der Materialien
Matériaux d'étanchéité, piles à combustible à oxyde solide utilisant lesdits matériaux et procédé de fabrication de ces matériaux

(30) Priority: 12.04.2007 US 923021 P
(43) Date of publication of application: 04.01.2012
(62) Divisional of application: 08742523.7
(73) Proprietor: Corning Incorporated, Corning, New York 14831 (US)
(72) Inventor: Lamberson, Lisa A., Painted Post, NY New York 14870 (US); Morena, Robert M., Lindley, NY New York 14858 (US); Sanford, Earl J., Campbell, NY New York 14821 (US); Thibault, Yves, Ottawa, Ontario K2EoA2 (CA); Wheaton, Bryan R., US/Painted Post NY New York 14870 (US)
(74) Representative: Sturm, Christoph

(56) References cited:
- WO-A-01/09059
- US-A1- 2003 040 420
- US-A1- 2005 147 866
- LAHL N ET AL: "ALUMINOSILICATE GLASS CERAMICS AS SEALANT IN SOFC STACKS", ELECTROCHEMICAL SOCIETY PROCEEDINGS, ELECTROCHEMICAL SOCIETY, PENNINGTON, NJ, US, vol. 99-19, no. 19, 1 January 1999 (1999-01-01), pages 1057-1066, XP009075946, ISSN: 0161-6374
- GUENTHER C ET AL: "THE STABILITY OF THE SEALING GLASS AF45 IN H2/H2O - AND O2/N2 - ATMOSPHERES", PROCEEDINGS OF THE INTERNATIONAL SYMPOSIUM ON SOLID OXIDE FUELCELLS, XX, XX, vol. 97, no. 18, 1 January 1997 (1997-01-01), pages 747-756, XP000951506,

## Description

### BACKGROUND OF THE INVENTION

### FIELD OF THE INVENTION

The present invention relates generally to glass sealing frits such as alkaline earth alumino-borosilicate frits, sealing materials and devices utilizing such frits. More specifically, these frits and sealing materials are suitable as sealing frits in solid oxide fuel cells (SOFC).

### TECHNICAL BACKGROUND

Frits which seal in the temperature range of 600°C to 1000°C represent an intermediate class of materials between the B₂O₃ or P₂O₅ based frits used for low temperature sealing of many commercial glass products and the diverse number of silicates utilized for high temperature joining of advanced ceramic, structural components.

Low temperature frits are used at temperatures below 600°C for sealing products such as cathode ray tubes (CRT), light bulbs and the like. High temperature frits are used at temperatures above 1000°C to produce articles which may embody high temperature, fiber reinforced, structural ceramics.

One class of intermediate temperature range (600 °C to 1000 °C) sealing materials is ZnO- B₂O₃-SiO₂ frit. Another is Li₂O-modified ZnO- Al₂O₃-SiO₂ frit designed for use between 900°C to 1000°C. Frits that seal in the range of 600°C to 800 °C are important for many applications, particularly for use in solid Oxide fuel cells (SOFC).

Document WO 03/036739 A2 for instance discloses a Solid Oxide Fuel Cell with an interconnector design comprising an alloy base plate, having a porous conductive ceramic contact layer thereover and a dense conductive ceramic blocking layer with air flow channels. These layers are connected together with a bonding and protective glass. The glass may have a composition in mole % of 50.5% BaO, 10.0% B2O3, 30% SiO2 and 10% Al2O3.

Lahl et al., "Aluminosilicate Glass Ceramics as Sealant in SOFC Stacks," Electrochemical Society Proceedings, vol. 99-19, pp. 1057-1061, discloses glass sealants for use in solid oxide fuel cells. The glass sealants synthesized had an AO-SiO₂-Al₂O₃-B₂O₃ composition, with A being Ca, Ba, Mg. Barium aluminosilicate glass comprised about 45% BaO, 45% SiO₂, 5% Al₂O₃, and 5%-B₂O₃. Günther et al., "The Stability of the Sealing Glass AF 45 in H2/H2O - And O2/N2 - Atmospheres," Electrochemical Society Proceedings, vol. 97-18, pp. 746-756 discloses the use of commercially available AF45 glass having a composition of about 64.2 mol% SiO₂ - 15.4 mol% B₂O₃ - 12.0 mol% BaO - 8.2 mol% Al₂O₃ - 0.2 mol% As₂O₃. The AF45 was used for sealing solid oxide fuel cell stacks operating at temperatures between 850°C and 950°C. U.S. 2005/0147866 A1 discloses a solid oxide fuel cell sealant comprising glass matrix and ceramic fiber. The glass matrix comprises one or more of the following compounds: BaO, Al₂O₃, SiO₂, CaO, TiO₂, ZrO₂, MgO, La₂O₃ and B₂O₃.

Also, from document WO 01/09059 A1 a glass ceramic compound for joining or sealing between at least two solid ceramic parts is known, wherein BaO, SrO, Ca O and MgO are present in an amount from about 20 mol % to about 55 mol %, Al2O3 is present in an amount from about 2 mol % to about 15 mol %, and SiO2 is present in an amount from about 40 mol % to about 70 mol %.

Furthermore, fuel cell devices undergo large thermal cycling and large thermal gradients, which induces thermal stresses in the fuel cell stack components. Thus, the seals need to be able to withstand high temperature fluctuations and have expansion coefficients compatible with electrolyte sheets and frames. If the seal will expand at a rate that is different from the thermal expansion rate of the frame or the electrolyte sheet, the seal may either crack or cause cracking of the electrolyte sheet. A defect in either the seal or the electrolyte sheet may necessitate a replacement of the electrolyte device.

Thus, the need to have alternative frit seal compounds for solid oxide fuel cells has been the subject of considerable amount of research in recent years.

### SUMMARY OF THE INVENTION

One aspect of the present invention relates to a solid oxide fuel cell device incorporating a seal resistant to hydrogen gas permeation at a temperature range of 600°C - 900°C, the seal having a CTE in the 90x10⁻⁷/°C to 120x10⁻⁷/°C, wherein the seal comprises a sealing material being highly crystalline, with at least 70 vol% crystalline phase, the sealing material includes:
(i) 80 wt to 100 wt % of glass frit, wherein the glass frit composition includes in mole%
   MgO, 0-10%
   CaO, 0-30%
   BaO, 30-50%
   B₂O₃, greater than 19% and less than 25%
   Al₂O₃, 10-30%
   SiO₂, 10-30%;
   wherein a B₂O₃/Al₂O₃ ratio is lower than 1.22 and
(ii) 0 wt %to 20 wt% filler. Preferably, the filler is selected from at least one of: at least partially stabilized zirconia, and/or MgO.

According to another aspect, the present invention relates to a crystalline material comprising: a compound of barium, aluminum, boron, and silicon oxides. Such crystalline material comprises in the stoichiometric range, in molar basis, 42-45BaO-18-23B₂O₃-22-27Al₂O₃-8-12SiO_{2.}
According to a still further aspect, the invention relates to a process according to Claim 9.

Additional features and advantages of the invention will be set forth in the detailed description which follows, and in part will be readily apparent to those skilled in the art from that description or recognized by practicing the invention as described herein, including the detailed description which follows, the claims, as well as the appended drawings.

One advantage of the sealing material of the present invention is that it seals fuel cell device components at temperature ranges (700-900°C) while having CTEs that are compatible with the CTEs of these components. Another advantage of the sealing material of the present invention is that the resultant seals are durable in the SOFC environments.

It is to be understood that both the foregoing general description and the following detailed description present exemplary embodiments of the invention, and are intended to provide an overview or framework for understanding the nature and character of the invention as it is claimed. The accompanying drawings are included to provide a further understanding of the invention, and are incorporated in and constitute a part of this specification. The drawings illustrate various embodiments of the invention and together with the description serve to explain the principles and operations of the invention.

### BRIEF DESCRIPTION OF THE DRAWINGS

**Figure 1** is a schematic perspective view of an exemplary solid oxide fuel cell device assembly.

**Figure 2** is an exploded, perspective view of a portion of the solid oxide fuel cell device assembly of Figure 1.

**Figure 3** is a perspective view of an exemplary fuel cell device.

**Figures 4a-4c** are SEM micrographs of the three exemplary composition listed in Table 1.

**Figure 5** is an x-ray diffraction pattern of one seal embodiment, before aging.

**Figure 6** is the x-ray diffraction pattern, after aging, of the seal of Figure 5.

**Figure 7** is the SEM (scanning electron microscope) photograph of the seal corresponding to Figure 6.

**Figure 8a** is an x-ray diffraction pattern for a heat treated glass, after aging, synthesized to yield new crystalline phase.

**Figure 8b** is an x-ray diffraction patters showing an overlay of patterns of Figures 6 and 8a.

**Figure 9a and 9b** show electron microprobe scans across the frit-metal interface of an exemplary embodiment of the seal made by an exemplary seal composition and an exemplary method according to the present invention.

### DETAILED DESCRIPTION OF THE PREFERRED EMBODIMENTS

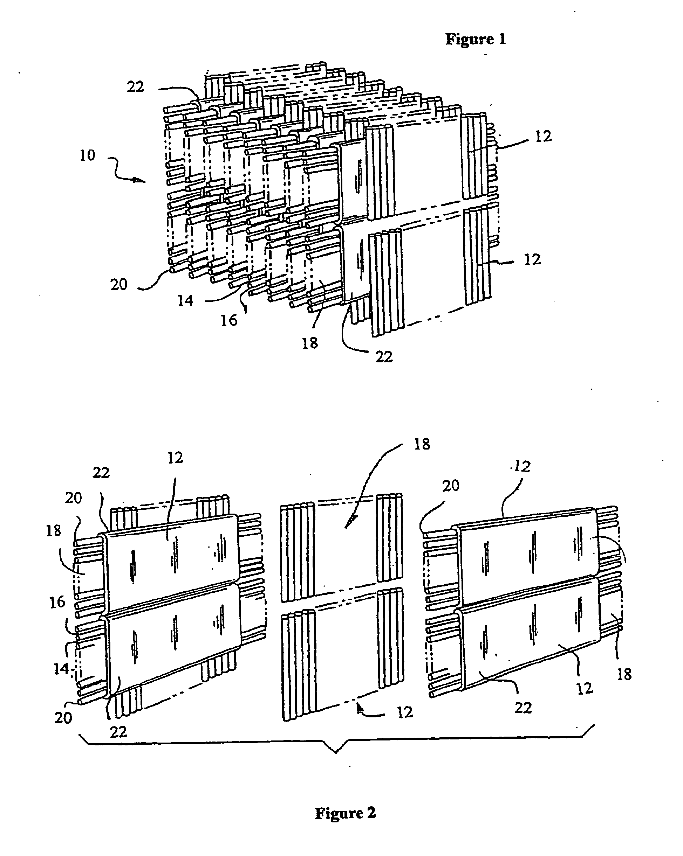

Reference will now be made in detail to the present preferred embodiments of the invention, examples of which are illustrated in the accompanying drawings. Whenever possible, the same reference numerals will be used throughout the drawings to refer to the same or like parts. Three exemplary embodiments of the inorganic electrolyte sheet of the present invention is shown schematically in **Figure 1****.** The fuel cell device assembly is designated generally throughout by the reference numeral **10.**

**Figure 1** is a perspective view of a typical SOFC device assembly **10.** **Figure 2** illustrates a portion of the fuel cell device assembly **10,** including stacked fuel cell devices **12.** The SOFC device assembly **10** includes alternating fuel cell devices **12,** each composed of layers of a solid electrolyte, cathode and anode plates. The solid electrolyte generally is yttrium (Y) - doped Zr0₂. Fuel cell devices **12** include anodes **14,** cathodes **16** and an electrolyte (not shown). Each fuel cell device **12** also comprises distribution member **18** which embodies a plurality of parallel passages **20** for the supply of electrolyte, oxidant or fuel. The axes of passages **20** lie in a common plane.

Distribution member **18** is preferably manufactured from two corrugated, ceramic plates. The corrugations of the plates are arranged parallel, and the troughs of one of the plates are bonded to the peaks of the other plate. This forms passages **20** which have a diameter on the order of 2 mm.

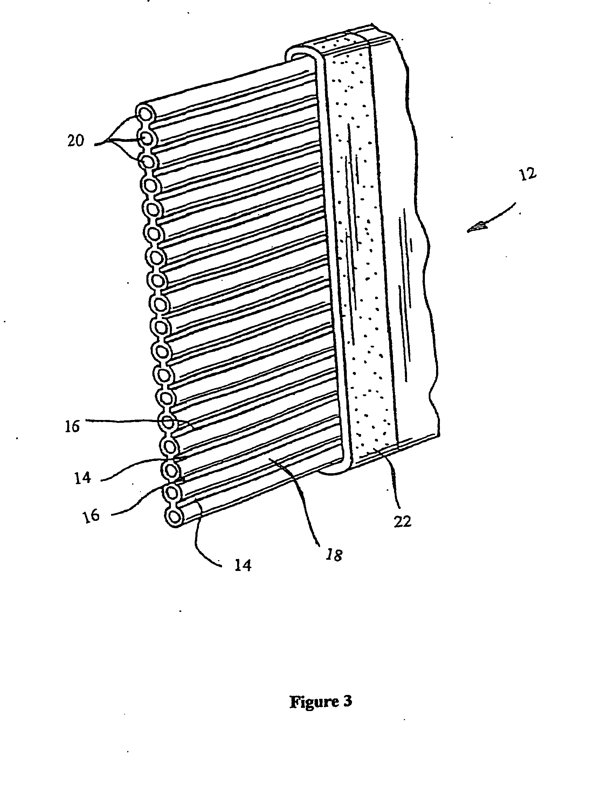

As shown in **Figure 2****,** porous support structure **22** surrounds and extends transversely of distribution member **18.** It contacts the peaks and the troughs of member **18** to form a plurality of parallel passages which are anode **14** or cathode **16** chambers of solid oxide fuel cell devices **12.** They provide the distribution and removal of the electrolyte for solid oxide fuel cell devices **12.** The corrugated ceramic plates have apertures between passages **20** to allow fuel to flow from passages **20** into anode **14** or cathode **16** chambers of solid oxide fuel cell devices **10.** **Figure 3** is an exploded, fragmentary view showing alternating anodes **14** and cathodes **16** and their relationship to passages **20.**

The glass-frit-based seals of this invention may encapsulate each cell **12,** or they may form a barrier between each cell **12,** a group of cells, or a component incorporating one or more cells **12.** When forming a barrier, the glass-frit-based seals may take the form of a plate sandwiched between adjacent cells **12.** Structure **22** also may be made of the glass frits of this invention. The glass-frit-based seals prevent hydrogen gas from diffusing from one cell **12** (or a group of cells) to another.

The glass-frit-based seals may be used in SOFC devices with different architecture than that shown in **Figures 1-3****,** any place where one or more SOFC device components need to be sealed to another component. For example, planar SOFC electrolyte sheets may be sealed with glass-frit based seals to metal frames (e.g. stainless steel frames) or ceramic frames. These seals are situated on and/or adjacent to these components, or there-between. Other metal components may also be sealed to the electrolyte sheets with the glass-frit-based seals. According to the following embodiments, these glass-frit-based seals include B₂O₃ and more specifically include barium, aluminum, boron and silicon oxides.

According to an embodiment of the present invention the solid oxide fuel cell device **10** incorporates a sealing material resistant to hydrogen gas permeation at a sealing temperature in the intermediate temperature range of 600°C -900°C. The sealing material has a CTE in the range 80x10⁻⁷/°C to 120x10⁻⁷/°C. The sealing material comprises sealing glass frit in 80 to 100 (preferably 90 to 100) weight % and an optional mill addition, for example a stabilized zirconia and/or MgO, 0 wt % to 20 wt% (preferably 0 to 10 wt%), such that total wt % of glass frit and the mill addition is 100 wt%. The glass frit composition includes in mole%:
MgO, 0-10%
CaO, 0-30%
BaO, 30-50%
B₂O₃, 19-25%
Al₂O₃, 10-30%
SiO₂, 10-30
wherein a B₂O₃/Al₂O₃ ratio is lower than 1.22.
Preferably, the glass frit has either no ZnO, or a relatively small amount of ZnO (<0.1 %)

It is preferable, if the mill addition is utilized, that the mean particle size of the addition be about 1 µm to 20 µm, more preferably 1 µm to 10 µm, and most preferably 5-10 µm. It is preferable mean particle size of glass frit he about 1 µm to 80 µm, more preferably 5 µm to 40 µm, and most preferably 10-20 µm.

According to some embodiments, the sealing glass frit is essentially a crystalline material (containing a minimum of approximately 70 vol% crystalline phase, in some embodiments 80 vol% (or more) crystalline phase), that contains B₂O₃. Some embodiments contain more than 90 vol% crystalline phase. The sealing glass frits of these embodiments comprise, for example, in mole percent: MgCl, 0-10%; CaO, 0-30%; RaO, 30-50%; B₂O₃, 19 to 25 %: Al₂O₃, 10-30%; and SiO₂, 10-30%. It is preferred that the B₂O₃ concentration be at a high level to assure high crystallization, for example, at least: 20, 21, 22, 23, 24, 25 mole %.

### EXAMPLES

The sealing glass frits of this invention will be further clarified by the following three examples, showing glass frit composition in mole percent.

**Table 1 -**

| | **Ex. 1** | **Ex. 2**(Comparative) | **Ex. 3** (Comparative) |
|---|---|---|---|
| **Type (after firing at 850º-1hr)** | Crystalline (phase a) + vitreous | Vitreous | Vitreous |
| **Type (after aging for >200hrs at 725º)** | Crystalline (phase a + phase b) | Vitreous + crystalline (phase a) | Vitreous (minor crystalline - phase a) |
| **Composition (molar)** | BaO 40 | BaO 40 | BaO 40 |
| | Al₂O₃ 20 | Al₂O₃ 26 | Al₂O₃ 24 |
| | B₂O₃ 20 | B₂O₃ 17 | B₂O₃ 12 |
| | SiO₂ 20 | SiO₂ 17 | SiO₂ 24 |

Wherein: phase "a" is stabilized hexacelsian type with composition BaO-Al₂O₃-2.8SiO₂; phase b is a new phase containing Ba, Al, B, and Si oxides. Phase b will be described in more detail later in the specification.

The data shown in **Table 1** is for three exemplary barium alumino-borosilicate seal compositions suitable as sealant materials in fuel cell devices. After melting, each composition was made into glass frit by dry ball-milling to a mean particle size of less than 80 µm, for example, 10 µm to 20 µm. The high CTE values and the high softening points required for SOFC sealing material is met by the compositions of all three examples. Although fillers are not required, they may be added to raise the CTE. Exemplary fillers are stabilized zirconia (CTE≈12.0x10⁻⁶/°C) or magnesium oxide (CTE≈15.0x10⁻⁶/°C), which can be present in the amounts, for example, 0 wt % to 20 wt%, preferably 5 wt % to 10 wt.%.

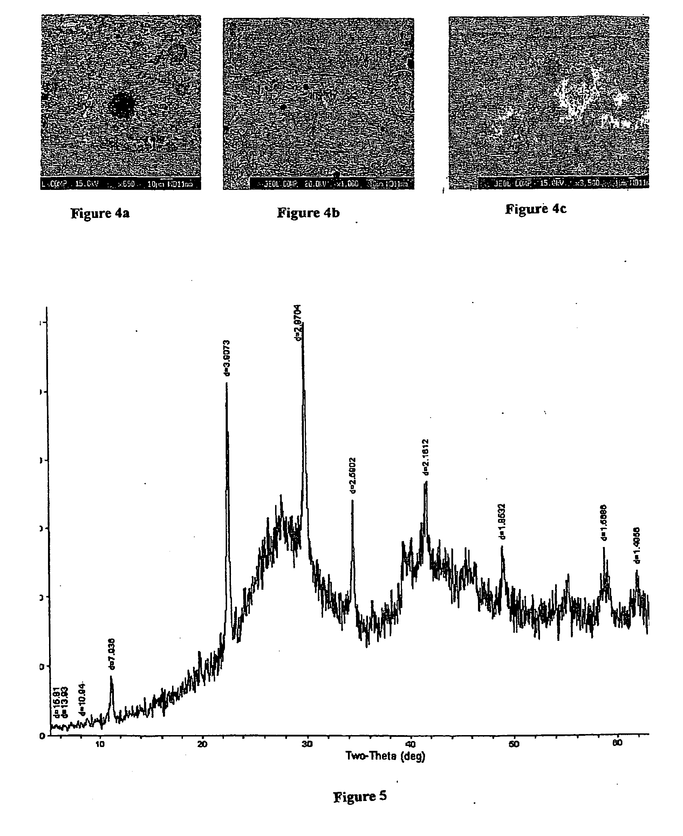

**Figures 4a-4c** are SEM (scanning electron microscope) micrographs of seals made from the frit materials shown in **Table 1.** **Figure 4a** corresponds to the frit of Ex. 1, **Figure 4b** corresponds to the frit of Ex. 2, and **Figure 4c** corresponds to the frit of Ex. 3. Each seal was made by first ball-milling the frit to 10 µm to 20 µm size, applying the frit onto a fuel cell metal frame, and then firing the frit to 850°C for about 1 hour. **Figure 4a** shows that the seal that corresponds to the frit of Ex. 1. This frit is highly crystalline, with little apparent residual glassy phase remaining. **Figure 4b** shows that the seal corresponding to the frit of Ex. 2 is composed of an interlocking array of crystals distributed within a glassy matrix. **Figure 4C** shows that the seal corresponding to the frit of Ex. 3 is essentially completely vitreous, with only a few small crystals present. **Table 2** below depicts quantitative phase analysis data in vol % (obtained by SEM image analysis on areal measurments) of the three seals comprised of exemplary frits of Table 1, both as-fired, and also after aging. This table shows that the seal containing frit material in Ex1 is primarily crystalline with only approximately 10% to 15% glassy phase, while the seal contained in Ex 3 is extremely glassy, with a glassy content of approximately 85-95%. The seal corresponds to the frit of Ex. 2 is the frit that was initially glassy, but partially crystallized during aging to an admixture of glass and crystals.

**Table 2**

| **Frit** | **As-fired (850°-1hr, N₂)** | | | **After-aging (725°, air)** | | | **Time of aging (hrs)** |
|---|---|---|---|---|---|---|---|
| | **Porosity** | **Crystals** | **Glassy** | **Porosity** | **Crystals** | **Glassy** | |
| **Ex. 3*** | 4.8 | 1.2 | 93.9 | 6.4 | 7.4 | 86.2 | 167 |
| **Ex. 2*** | 4.0 | 0.92 | 95.1 | 2.5 | 31.6 | 65.9 | 1063 |
| **Ex. 1** | 6.2 | 82.9 | 10.9 | 15.8 | 67.5 | 16.7 | 167 |

| | | | | | | | |
|---|---|---|---|---|---|---|---|
| * comparative examples. | | | | | | | |

Seals made with the glass frit that comprises in mole %: MgO, 0-10%; CaO, 0-30%; BaO, 30-50%; B₂O₃, more than 19% (preferably at least 20%) and less than 25%; Al₂O₃, 10-30%; SiO₂, 10-30% (e.g., example 1 frit of Table 1) show a surprising property. The seal material, which is an alumino-borosilicate glass to begin with, after firing (e.g. at 700-900°C) surprisingly undergoes nearly complete crystallization (e.g. crystal content greater than 80%) during firing and extended aging, which was not expected for borosilicate-based glasses or alumino-borosilicate glasses. Typically, borosilicate or alumino-borosilicate glasses crystallize to either cristobalite or an alkaline/alkaline earth silicate phase, with a large amount (greater than 40 vol%) of residual borate-enriched glassy phase remaining. We have discovered for example that the glass frit of Ex. 1 crystallizes to a previously unknown phase, a complex barium alumino-borosilicate crystalline compound of approximate composition (molar %) 42-45BaO-18-23B₂O₃-22-27Al₂O₃-8-12SiO₂, e.g., 45BaO-20B₂O₃-25Al₂O₃-10SiO₂, in addition to the known hexacelsian-type compound (approximate composition, molar basis, BaO-Al₂O₃-2.8SiO2). The complete crystallization results in minimal glassy phase (less than 25%, typically less than 20%, preferably less than 15%, more preferably less than 10%), an advantageous attribute for seals with long term exposure to high temperatures, where a hard, rigid seal is desirable to avoid deformation and sliding. In addition the new phase (e.g., 45BaO-20B₂O₃-25Al₂O₃-10SiO₂) ties up all the B₂O₃, thus minimizing any volatilization concerns. The resulting material is highly crystalline, preferably with crystal content greater than 80%, more preferably greater than 90%.

Listed below are phase identification results of several examples of a seal material, that were obtained from the x-ray diffraction data. These compositions were prepared, ground and fired as described above relative to Ex.1-3. The barium alumino borosilicate phase formed in compositions that had B₂O₃ levels as low as 19 mole %, for example 19 to 25 mole%. There also appears to be an effect of B₂O₃/Al₂O₃ ratio, in that the barium alumino borosilicate phase did not form when the B₂O₃/Al₂O₃ ratio = 1.22, even though the B₂O₃ level was sufficiently high. At the same B₂O₃ level, but lower B₂O₃/Al₂O₃, the barium alumino borosilicate phase was formed.

**Table 3**

| | **Ex. 1** | **Ex. 2*** | **Ex. 3*** | **Ex. 4*** | **Ex. 5** | **Ex. 6*** | **Ex. 7*** | **Ex. 8** | **Ex. 9** |
|---|---|---|---|---|---|---|---|---|---|
| **BaO** | 40 | 40 | 40 | 40 | 40 | 40 | 40 | | 39 |
| **Al₂O₃** | 20 | 26 | 24 | 18 | 19 | 21 | 22 | 22 | 20 |
| **B₂O₃** | 20 | 17 | 12 | 22 | 21 | 19 | 18 | 20 | 22 |
| **SiO₂** | 20 | 17 | 24 | 20 | 20 | 20 | 20 | 19 | 19 |
| **B₂O₃/Al₂O₃** | 1 00 | 0 65 | 0 50 | 1 22 | 1 10 | 0 90 | 0 82 | 0 90 | 1 10 |
| **850°-1hr** | phase a | glass | glass | Phase a | phase a | phase a | phase a | phase a | phase a |
| **850°-1hr + 750°-24hr** | a and b phases (strong) | a and b phases | Glass (neither a or b phase) | a | a and mod b phase | a and strong b phase | a | a and strong b phase | a and strong b phase |

| | | | | | | | | | |
|---|---|---|---|---|---|---|---|---|---|
| * = comparative example | | | | | | | | | |

Phase a is the hexacelsian phase (BaO· Al₂O₃· 2.8SiO₂), phase b is the new barium alumino borosilicate phase (e.g., 45BaO·25Al₂O₃·20B₂O₃·10SiO₂).

For example, when using the frit composition of Ex. 1, the first crystalline phase that appears with firing is a hexacelsian-type composition, comprising about, in molar basis, of BaO-Al₂O₃-2.8SiO₂, which co-exists with a large amount of residual glass. **Figure 5** shows an x-ray diffraction pattern of the fired frit (composition of Ex. 1), following initial 750°C 1 hour firing. This data was generated from a copper K-alpha radiation source (λ=1.5418 Å=154.18 pm) and displays diffraction intensity as a function of two-theta position. (All peaks are BAS_{2 8}.) This figure illustrates that the hexacelsian-type phase with major diffraction peaks at 794 pm, 391 pm, 297pm and 259 pm (7.94 Å, 3.91 Å, 2.97 Å and 2.59 Å) is present along with substantial residual glass (amorphous halo centered around 29 degrees two-theta). **Table 4** displays two-theta, d-spacing and intensity for peaks associated with the hexacelsian phase in the two-theta range from 5 degrees to 70 degrees.

**Table 4**

| **2-Theta** | **D(Å)*** | **Intensity %** |
|---|---|---|
| 11.141 | 7.9357 | 16.6 |
| 22.74 | 3.9073 | 100 |
| 30.041 | 2.9722 | 93.7 |
| 34.601 | 2.5902 | 44.7 |
| 39.483 | 2.2805 | 16.1 |
| 41.78 | 2.1603 | 31.7 |
| 49.137 | 1.8526 | 24.3 |
| 55.398 | 1.6572 | 15.6 |
| 58.821 | 1.5686 | 25.5 |
| 62 | 1.4956 | 19 |

| | | |
|---|---|---|
| * 1Å = 100 pm | | |

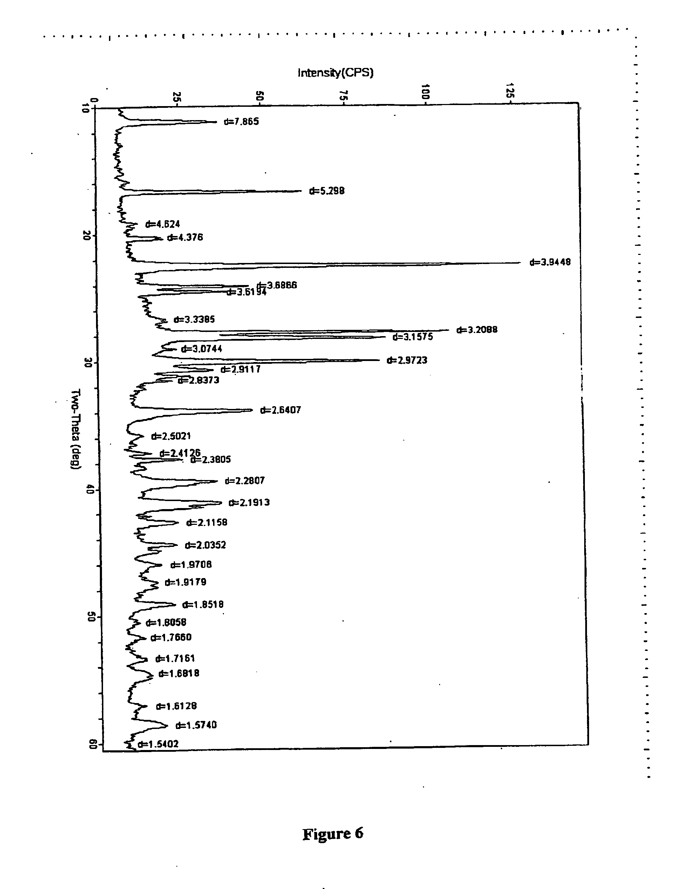

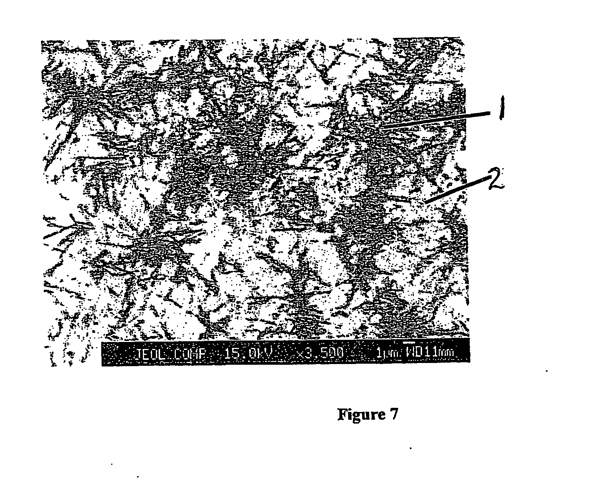

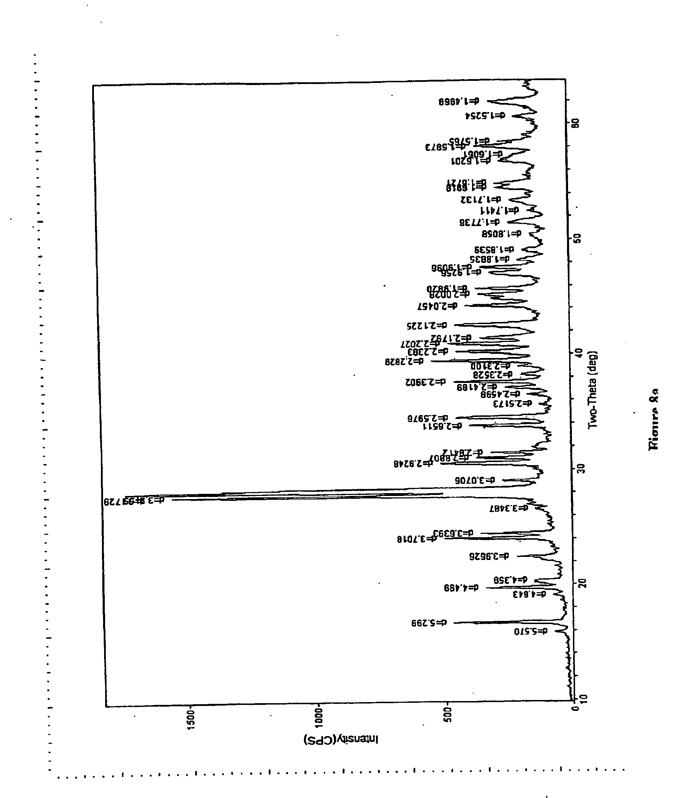

During aging **(****Figure 6****),** the residual glass is replaced by the newly discovered crystalline phase, ( which in this embodiment is 45BaO-20B₂O₃-25Al₂O₃-10SiO₂), which is present along with the hexacelsian type phase, as can be seen in the x-ray diffraction pattern for a seal sample aged 24 hrs at 750°C. This data was generated in the same manner as the data of **Figure 5****.** **Figure 6** illustrates that this newly discovered crystalline phase, with major diffraction peaks at 530 pm, 370 pm, 321 pm, 17 pm, 292 pm, 260 pm, 239 pm, 228 pm and 212 pm (5.30 Å, 3.70 Å, 3.21 Å, 3.17 Å 2.92 Å, 2.60 Å, 2.39 Å, 2.28 Å and 2.12Å), is present along with the hexacelsian phase described in **Figure 5****,** and relatively little residual glass (for example less than 10 volume percent). As may be seen in the SEM shown in **Figure 7****,** the seal microstructure includes two phases (phase 1 being of hexacelsian type), with dark, acicular crystals of the hexacelsian phase distributed in a matrix of the new phase (phase 2). **Figure 7** is a micrograph which shows the new phase 2 (light colored in the photo), which appears to be continuous (i.e., not isolated in pockets). Microprobe analysis of the seal sample showed the new phase to have the composition 45BaO-20B₂O₃-25Al₂O₃-10SiO_{2.} When a new glass was made corresponding to this composition and then fired and aged, it provides an x-ray diffraction pattern shown in **Figure 8a****. Table 5** summarizes the x-ray diffraction peak information for the new phase.

**Table 5**

| **2-Theta** | **d(Å)** | **Height%** |
|---|---|---|
| 11.24 | 7.8655 | 25.5 |
| 15.82 | 5.5974 | 1.9 |
| 16.72 | 5298 | 46.8 |
| 20.279 | 4.3756 | 8.8 |
| 22.521 | 3.9448 | 100 |
| 24.121 | 3.6866 | 28.5 |
| 24.54 | 3.6246 | 23.1 |
| 27.78 | 3.2088 | 74.8 |
| 28.24 | 3.1575 | 58.4 |
| 28.98 | 3.0786 | 2 |
| 30.04 | 2.9723 | 58 |
| 30.7 | 2.9099 | 14.4 |
| 33.92 | 2.6407 | 31.6 |
| 35.8 | 2.5062 | 3.4 |
| 37.76 | 2.3805 | 3.7 |
| 39.759 | 2.2653 | 14.8 |
| 41.16 | 2.1913 | 20.9 |
| 42.7 | 2.1158 | 10.4 |
| 44.422 | 2.0377 | 9.8 |
| 45.943 | 1.9737 | 4.9 |
| 47.4 | 1.9164 | 4.6 |
| 49.161 | 1.8518 | 10.6 |
| 51 78 | 1.7641 | 5 |
| 53.501 | 1.7114 | 4.9 |
| 54.68 | 1.6772 | 6.1 |
| 57.061 | 1.6128 | 4.4 |
| 58.521 | 1.5759 | 7.8 |
| 60.801 | 1.5222 | 5 |
| 62 1 | 1.4934 | 3.6 |
| 71.6 | 1.3168 | 3.4 |
| 73.1 | 1.2935 | 4.4 |

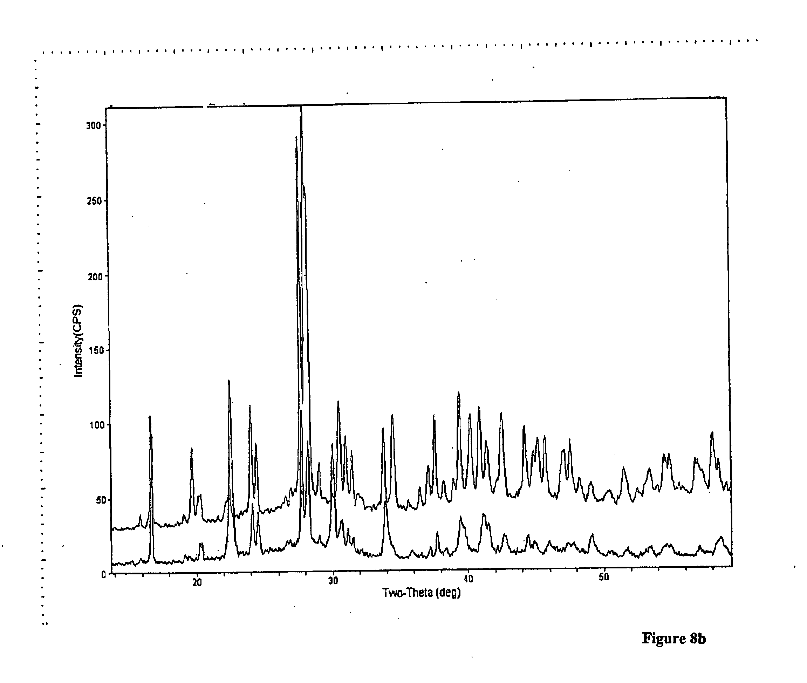

**Figure 8b** displays an overlay of previously shown **Figure 6** containing a mixture of hexacelsian and the new phase, (i.e. 2 phases or 2 crystalline structures) and **Figure 8a****.** Note the good agreement between the non-hexacelsian peaks in **Figure 6** with the peaks in **Figure 8a****.**

Thus, according to this embodiment the crystalline material includes a new compound comprising of barium, aluminum, boron, and silicon oxides. This compound may be characterized in powder x-ray diffractometry, with the crystalline material having peaks with not less than 10% (and preferably at least 15 %, and most preferably at least 20%) intensity relative to a peak at 317 picometer (3.17 angstroms) for at least the following inter-planar spacing (d-spacing in picometer, +/- 1%, or +/-0.05): 530, 370, 321, 317, 292, 260, 239, 228 and 212), ((d-spacing in angstroms), +/- 1%, or +/-0.05): 5.30, 3.70, 3.21, 3.17, 2.92, 2.60, 2.39, 2.28 and 2.12). Preferably, the crystalline material has additional peaks with not less than 15% intensity relative to the peak at 317 picometer (3.17 angstroms) at least the following inter-planar spacing (d-spacing in picometer +/- 1%, or +/-0.05): 450, 364, 288, 265, 224, 220, 204 ((d-spacing in angstroms +/- 1%, or +/-0.05): 4.50, 3.64, 2.88, 2.65, 2.24, 2.20, 2.04).

The sealing material corresponding to the frit with the Ex. 3 composition (highest amount of glassy phase) has the lowest softening point (842° C). The softening range viscosity of the sealing material with the highest crystalline-containing frit (Ex. 1) is much higher, and is larger than 1000°C (in this specific example it is 1021°C). Surprisingly, the softening point of sealing material containing Ex. 2 frit (glass and crystals containing frit) is also larger than 1000° C (in this specific example it is 1085°C), because of the interlocking nature of the crystals. These high softening range viscosities permit the seal to be functional at operating temperatures up to at least 900°C.

CTE values of seals and coatings made with the frits similar to those depicted in Ex.1 - Ex.3 of Table 1 are in the range of 80x 10⁻⁷to 120x 10⁻⁷ for temperatures from room temperature to the onset of viscous flow (e.g. 500 °C to 600°C, or above). For example, CTE ranges for some embodiments are 80x10⁻⁷ to 05x10⁻⁷. These values do not change appreciably after aging. For fired frits corresponding to Ex.1 and Ex.2 of Table 1, the CTE values were measured both before (after fired at 850 °C for 1 hour) and after long term aging for 500 hours at 725°C. These CTE values match the CTE values of materials used for fuel cell electrodes, interconnects and support structures. The resultant seals (and coatings) were applied to the stainless steel metal substrate and were strongly adherent.

If the metal substrate, component, or frame is a high Cr content ferric stainless steel with improved oxidation resistance, a barium chromite interfacial phase will frequently form when the seal or coating is fired in air. (This phase forms from a reaction between the Ba-containing frit, and the Cr of the stainless steel). This phase will frequently lead to delamination of the seal or coating as a result of the build-up of interfacial stresses. Applicants discovered that when fired in oxygen-free atmosphere (e.g., 100% N₂) no such interfacial phase forms, and the seals and coatings are also especially adherent. No delamination of coatings/seals was observed when the sealing in an oxygen-free atmosphere. Air-aging of seals made fired in 100% N₂ shows no development of a barium chromite interfacial phase even after 1063 hrs at 725°C.

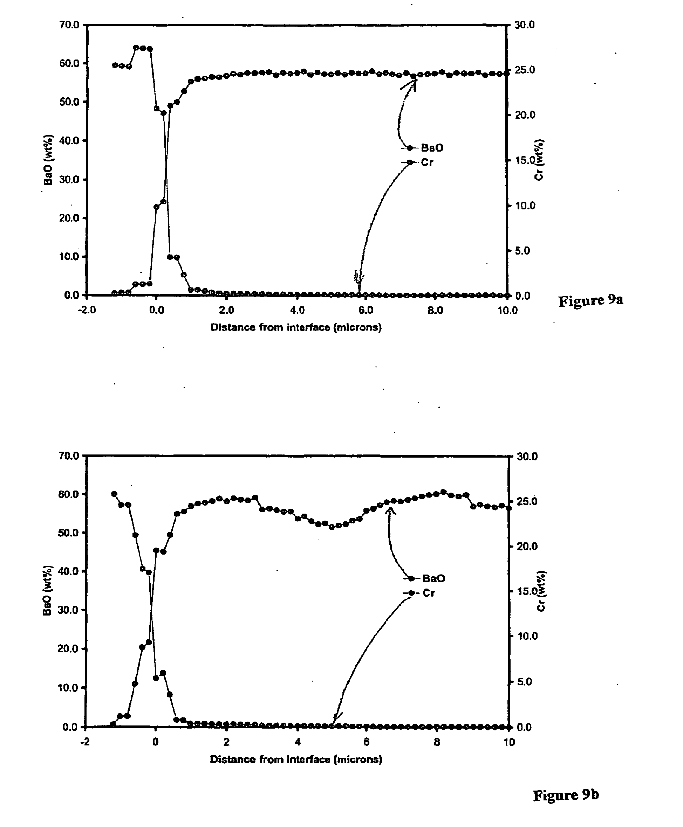

One problem with seals or coatings on ferric stainless steel components is that these metal components "leach" Cr, which forms Cr and/or chromium oxide on the metal surface, thus compromising seal adherence and integrity. The Cr/chromium oxide surface areas tend to grow faster in the high temperature environment that the fuel cell devices operate in, which may cause failure of the fuel cell devices and fuel cell systems due to delamination caused by interfacial stresses. Applicants discovered that when a seal is fired in non-oxidizing environment, no chromium oxide is formed on the seal-metal interface. **Figures 9a and 9b** show electron microprobe scans across the seal-metal interface (between Ex. 2 seal and a Cr-containing stainless steel member). **Figure 9a** shows the scan for a sample fired at 850°C for 1hr in 100% N₂. It shows that no enriched chromite phase was observed at the seal-metal interface, with the chromium concentration reaching very low values (<1 wt%). **Figure 9b** shows a similar (100% N₂ fired at 850°C.) sample after aging in air for 1063 hours at 750°C. Note that no chromite interfacial phase is observed, despite the long-term air aging, with the chromium profile virtually identical to that shown in **Figure 9a****.** Both graphs show a chromium profile that with distance across the interface changes from a high chromium level in the metal component to virtually no chromium at the interface and within the seal. (Because of finite size of the microprobe probe, the chromium profiles do not decrease abruptly to zero at the interface).

Since BaO content in the seal is one of the drivers for the formation of the chromium-enriched interface, (e.g., when the glass frit contains in mole%: MgO, 0-10%; CaO, 0-30%; BaO, 30-50%; B₂O₃, 5-40%; Al₂O₃, 10-30%, and SiO₂, 10-30), firing the seal material that includes this frit in non-oxidizing atmosphere prevents formation of the chromium enriched interface. It is noted that firing other seals and/or coatings in non-oxidizing environments will also prevent formation of the chromium enriched interface during subsequent air aging.

Thus, there is no enrichment of chromium at the seal-metal interface despite the extended aging in air. Accordingly, wherein a fuel cell component or device is aged in an oxidizing atmosphere of at least 700°C, it contains no barium chromite interfacial phase at the boundary between the seal and stainless steel member when the sealing is done in oxygen-free atmosphere.

According to an embodiment of the present invention a method of making a sealed fuel cell component comprising the steps of: (i) providing a metal component (for example chromium containing stainless steel component); (ii) providing a ceramic electrolyte sheet; (iii) situating said ceramic electrolyte sheet in close proximity to said chromium containing stainless steel component with a glass frit containing barium; and (iv) firing the frit, thereby adhering it to said stainless steel component and said ceramic electrolyte sheet. Preferably, the method of claim 14, wherein said fuel cell component is aged in an oxidizing atmosphere at at least 700°C, and contains no barium chromite interfacial phase at the boundary between the seal and stainless steel component.

According to one embodiment, a process for producing a Ba- alumino-borosilicate crystalline material includes heat treating, at a temperature of 700 °C to 900 °C, a powdered glass comprising of, in mole %:
MgO, 0-10%
CaO, 0-30%
BaO, 30-50%
B₂O₃, greater than 19% and less than 25%;
Al₂O₃, 10-30%
SiO₂, 10-30%,
a B₂O₃/Al₂O₃ ratio lower than 1.22.

## Claims

1. A solid oxide fuel cell device comprising:
a seal resistant to hydrogen gas permeation at a temperature in the range of 600°C -900°C, the seal having a CTE in the range 80x10⁻⁷/°C to 120x10⁻⁷/°C, wherein the seal comprises a sealing material being highly crystalline, with at least 70 vol% crystalline phase, the sealing material includes
(i) 80 wt % to 100 wt% of glass frit, wherein the glass frit composition comprises in mole %,
MgO, 0-10%
CaO, 0-30%
BaO, 30-50%
B₂O₃, greater than 19 % and less than 25%
Al₂O₃, 10-30%
SiO₂, 10-30%;
wherein a B₂O₃/Al₂O₃ ratio is lower than 1.22 and
(ii) 0 wt % to 20 wt % filler.

2. The solid oxide fuel cell device according to claim 1, wherein the sealing material includes a plurality of phases and the major crystalline phase is an alkaline earth alumino-borosilicate compound comprising in the stoichiometric range, in molar basis, 42-45BaO-18-23B₂O₃-22-27Al₂O₃-8-12SiO₂.

3. The solid oxide fuel cell device according to claim 1, wherein said seal comprises a crystalline microstructure comprising of a hexacelsian type crystaline phase dispersed within a crystalline barium alumino-borosilicate phase comprising in the stoichiometric range, in molar basis, 42-45BaO-18-23B₂O₃-22-27Al₂O₃-8-12SiO₂.

4. A crystalline material comprising of: a compound of barium, aluminum, boron, and silicon oxides wherein said compound comprises in the stoichiometric range, in molar basis, 42-45BaO-18-23B₂O₃-22-27Al₂O₃-8-12SiO₂.

5. The crystalline compound of claim 4 further comprising a crystalline hexacelsian compound.

6. The crystalline compound according to claim 4, wherein in powder x-ray diffractometry, the crystalline material has peaks with not less than 15% intensity relative to a peak at 317 picometer (3.17 angstroms) for at least the following inter-planar spacing (d-spacing in picometer, +/- 1 %): 530, 370, 321, 317, 292, 260, 239, 228 and 212 ((d-spacing in angstroms, +/- 1%): 5.30, 3.70, 3.21, 3.17, 2.92, 2.60, 2.39, 2.28 and 2.12).

7. The crystalline compound according to claim 6, wherein in powder x-ray diffractometry, the crystalline material has additional peaks with not less than 10% intensity relative to a peak at 317 picometer (3.17 angstroms) for at least the following inter-planar spacing (d-spacing in picometer, +/- 1 %): 450, 364, 288, 265, 224, 220, and 204 ((d-spacing in angstroms +/- 1%): 4.50, 3.64, 2.88, 2.65, 2.24, 2.20, 2.04).

8. The crystalline material according to claim 4, wherein in powder x-ray diffractometry, the crystalline material includes a hexacelsian-type compound which has peaks with not less than 10% intensity relative to a peak at 391 picometer (3.91 angstroms) for at least the following inter-planar spacing (d-spacing in picometer, +/- 1%): 794, 391, 297, 259, 216 and 185 ((d-spacing in angstroms, +/- 1%): 7.94, 3.91, 2.97, 2.59, 2.16 and 1.85).

9. A process for producing a crystalline material, said process including the step of by heat treating, at a temperature of 700 °C to 900 °C a powdered glass comprising of, in mole %:
MgO, 0-10%
CaO, 0-30%
BaO, 30-50%
B₂O₃, greater than 19% and less than 25%;
Al₂O₃, 10-30%
SiO₂, 10-30%,
a B₂O₃/Al₂O₃ ratio lower than 1.22, thereby producing a Ba- alumino-borosilicate crystalline phase according to claim 4.

## Patentansprüche

1. Festoxidbrennstoffzellenvorrichtung, umfassend:
eine Dichtung, die bei einer Temperatur im Bereich von 600°C-900°C gegenüber Wasserstoffgaspermeation resistent ist, wobei die Dichtung einen WAK im Bereich von 80x10⁻⁷/°C bis 120x10⁻⁷/°C aufweist, wobei die Dichtung ein hochkristallines Dichtungsmaterial mit mindestens 70 Vol.-% kristalliner Phase umfasst, und das Dichtungsmaterial
(i) 80 Gew.-% bis 100 Gew.-% Glasfritte, wobei die Glasfrittenzusammensetzung in Mol-%
MgO, 0-10%
CaO, 0-30%
BaO, 30-50%
B₂O₃, mehr als 19% und weniger als 25%
Al₂O₃, 10-30%
SiO₂, 10-30%
wobei das B₂O₃/Al₂O₃-Verhältnis weniger als 1,22 beträgt, umfasst; und
(ii) 0 Gew.-% bis 20 Gew.-% Füllstoff enthält.

2. Festoxidbrennstoffzellenvorrichtung nach Anspruch 1, wobei das Dichtungsmaterial mehrere Phasen enthält und es sich bei der kristallinen Hauptphase um eine Erdalkalimetallaluminoborosilikatverbindung, die im stöchiometrischen Bereich auf molarer Basis 42-45 BaO - 18-23 B₂O₃ - 22-27 Al₂O₃ - 8-12 SiO₂ umfasst, handelt.

3. Festoxidbrennstoffzellenvorrichtung nach Anspruch 1, wobei die Dichtung eine kristalline Mikrostruktur aus einer in einer kristallinen Bariumaluminoborosilikatphase, die im stöchiometrischen Bereich auf molarer Basis 42-45 BaO - 18-23 B₂O₃ - 22-27 Al₂O₃ - 8-12 SiO₂ umfasst, dispergierten kristallinen Phase vom Hexacelsian-Typ umfasst.

4. Kristallines Material aus: einer Verbindung von Barium-, Aluminium-, Bor- und Silciumoxiden, wobei die Verbindung im stöchiometrischen Bereich auf molarer Basis 42-45 BaO - 18-23 B₂O₃ - 22-27 Al₂O₃ - 8-12 SiO₂ umfasst.

5. Kristalline Verbindung nach Anspruch 4, die ferner eine kristalline Hexacelsianverbindung umfasst.

6. Kristalline Verbindung nach Anspruch 4, wobei das kristalline Material in der Pulverröntgendiffraktometrie Peaks mit einer Intensität von mindestens 15% relativ zu einem Peak bei 317 Picometer (3,17 Angstrom) für mindestens den folgenden Netzebenenabstand (d-Abstand in Picometer, +/- 1%) aufweist: 530, 370, 321, 317, 292, 260, 239, 228 und 212 ((d-Abstand in Angstrom, +/- 1%): 5,30, 3,70, 3,21, 3,17, 2,92, 2,60, 2,39, 2,28 und 2,12).

7. Kristalline Verbindung nach Anspruch 6, wobei das kristalline Material in der Pulverröntgendiffraktometrie zusätzliche Peaks mit einer Intensität von mindestens 10% relativ zu einem Peak bei 317 Picometer (3,17 Angstrom) für mindestens den folgenden Netzebenenabstand (d-Abstand in Picometer, +/- 1%) aufweist: 450, 364, 288, 265, 224, 220 und 204 ((d-Abstand in Angstrom, +/- 1%): 4,50, 3,64, 2,88, 2,65, 2,24, 2,20, 2,04).

8. Kristalline Verbindung nach Anspruch 4, wobei das kristalline Material in der Pulverröntgendiffraktometrie eine Verbindung vom Hexacelsian-Typ enthält, die Peaks mit einer Intensität von mindestens 10% relativ zu einem Peak bei 391 Picometer (3,91 Angstrom) für mindestens den folgenden Netzebenenabstand (d-Abstand in Picometer, +/- 1%) aufweist: 794, 391, 297, 259, 216 und 185 ((d-Abstand in Angstrom, +/- 1%): 7,94, 3,91, 2,97, 2,59, 2, 16 und 1,85).

9. Verfahren zur Herstellung eines kristallinen Materials, bei dem man durch Wärmebehandlung eines pulverförmigen Glases, das in Mol-%
MgO, 0-10%
CaO, 0-30%
BaO, 30-50%
B₂O₃, mehr als 19% und weniger als 25% Al₂O₃, 10-30%
SiO₂, 10-30%
ein B₂O₃/Al₂O₃-Verhältnis von weniger als 1,22 umfasst, bei 700°C bis 900°C eine kristalline Ba-Aluminoborosilikatphase gemäß Anspruch 4 erzeugt.

## Revendications

1. Dispositif de pile à combustible à oxyde solide comprenant :
un joint d'étanchéité résistant à la perméation de l'hydrogène gazeux à une température dans la gamme de 600 °C-900 °C, le joint d'étanchéité ayant un CDT dans la gamme de 80·10⁻⁷/°C à 120·10⁻⁷/°C, le joint d'étanchéité comprenant un matériau d'étanchéité hautement cristallin, avec au moins 70 % en volume de phase cristalline, le matériau d'étanchéité comprenant
(i) 80 % en poids à 100 % en poids de fritte de verre, la composition de fritte de verre comprenant, en pourcentage molaire,
0-10 % de MgO,
0-30 % de CaO,
30-50 % de BaO,
plus de 19 % et moins de 25 % de B₂O₃,
10-30 % d'Al₂O₃,
10-30 % de SiO₂,
le rapport B₂O₃/Al₂O₃ étant inférieur à 1,22, et
(ii) 0 % en poids à 20 % en poids de charge.

2. Dispositif de pile à combustible à oxyde solide selon la revendication 1, dans lequel le matériau d'étanchéité comprend une pluralité de phases et la phase cristalline principale est un composé d'alumino-borosilicate alcalino-terreux comprenant dans la plage stoechiométrique, sur une base molaire, 42-45BaO-18-23B₂O₃-22-27Al₂O₃-8-12SiO₂.

3. Dispositif de pile à combustible à oxyde solide selon la revendication 1, dans lequel ledit joint d'étanchéité comprend une microstructure cristalline comprenant une phase cristalline de type hexacelsian dispersée à l'intérieur d'une phase cristalline d'aluminoborosilicate de baryum comprenant dans la plage stoechiométrique, sur une base molaire, 42-45BaO-18-23B₂O₃-22-27Al₂O₃-8-12SiO₂.

4. Matériau cristallin comprenant un composé d'oxydes de baryum, aluminium, bore et silicium, ledit composé comprenant dans la plage stoechiométrique, sur une base molaire, 42-45BaO-18-23B₂O₃-22-27Al₂O₃-8-12SiO₂.

5. Composé cristallin selon la revendication 4, comprenant en outre un composé d'hexacelsian cristallin.

6. Composé cristallin selon la revendication 4 dans lequel, en diffractométrie des rayons X sur poudre, le matériau cristallin a des pics avec une intensité supérieure ou égale à 15 % de l'intensité d'un pic à 317 picomètres (3,17 angströms) au moins pour les distances interréticulaires suivantes (distances d en picomètres, ± 1 %) : 530, 370, 321, 317, 292, 260, 239, 228 et 212 ((distances d en angströms, ± 1 %) : 5,30, 3,70, 3,21, 3,17, 2,92, 2,60, 2,39, 2,28 et 2, 12).

7. Composé cristallin selon la revendication 6 dans lequel, en diffractométrie des rayons X sur poudre, le matériau cristallin a des pics supplémentaires avec une intensité supérieure ou égale à 10 % de l'intensité d'un pic à 317 picomètres (3,17 angströms) au moins pour les distances interréticulaires suivantes (distances d en picomètres, ± 1 %) : 450, 364, 288, 265, 224, 220 et 204 ((distances d en angströms, ± 1 %) : 4,50, 3,64, 2,88, 2,65, 2,24, 2,20 et 2,04).

8. Matériau cristallin selon la revendication 4, le matériau cristallin comprenant un composé de type hexacelsian qui, en diffractométrie des rayons X sur poudre, a des pics avec une intensité supérieure ou égale à 10 % de l'intensité d'un pic à 391 picomètres (3,91 angströms) au moins pour les distances interréticulaires suivantes (distances d en picomètres, ± 1 %) : 794, 391, 297, 259, 216 et 185 ((distances d en angströms, ± 1 %) : 7,94, 3,91, 2,97, 2,59, 2,16 et 1,85).

9. Procédé de production d'un matériau cristallin, ledit procédé comprenant l'étape consistant à traiter thermiquement, à une température de 700 °C à 900 °C, un verre en poudre comprenant, en pourcentage molaire,
0-10 % de MgO,
0-30 % de CaO, 30-50 % de BaO,
plus de 19 % et moins de 25 % de B₂O₃,
10-30 % d'Al₂O₃,
10-30 % de SiO₂,
le rapport B₂O₃/Al₂O₃ étant inférieur à 1,22,
pour obtenir ainsi une phase cristalline d'alumino-borosilicate de baryum selon la revendication 4.
